# EUROPÄISCHE PATENTSCHRIFT

(11) **EP 0 703 814 B1**
(45) Veröffentlichungstag und Bekanntmachung des Hinweises auf die Patenterteilung: **13.08.1997**
(21) Anmeldenummer: 94918845.2
(22) Anmeldetag: 07.06.1994
(51) Int. Cl.: B01D 1/18, F26B 3/08, B01J 2/04

(54) **MODIFIZIERTES TROCKNUNGSVERFAHREN UNTER MITVERWENDUNG VON HEISSDAMPF IM TROCKNUNGSMEDIUM UND SEINE ANWENDUNG**
MODIFIED DRYING PROCESS USING INTER ALIA SUPERHEATED STEAM IN THE DRYING MEDIUM, AND ITS USE
PROCEDE MODIFIE DE SECHAGE AVEC UTILISATION CONJOINTE DE VAPEUR SURCHAUFFEE DANS LE FLUIDE DE SECHAGE, ET MISE EN OEUVRE DUDIT PROCEDE

(30) Priorität: 16.06.1993 DE 4319828
(43) Veröffentlichungstag der Anmeldung: 03.04.1996
(73) Patentinhaber: Henkel Kommanditgesellschaft auf Aktien, 40191 Düsseldorf (DE)
(72) Erfinder: RÄHSE, Wilfried, D-40589 Düsseldorf (DE); FUES, Johann-Friedrich, D-41516 Grevenbroich (DE)
(86) Internationale Anmeldenummer: EP9401843
(87) Internationale Veröffentlichungsnummer: WO9428993

(56) Entgegenhaltungen:
- EP-A- 0 149 266
- DE-A- 3 912 586
- DE-A- 4 204 090
- DE-A- 4 206 521
- US-A- 3 591 928

## Beschreibung

### Gebiet der Erfindung

Die Erfindung beschreibt Verbesserungen auf dem Gebiet der großtechnisch einsetzbaren Trocknungsverfahren unter Gewinnung von insbesondere festen Wertstoffen beziehungsweise Wertstoffgemischen mit der Zielvorstellung einerseits die heute immer dringlicher werdende Notwendigkeit erfüllen zu können, entsprechende Trocknungsanlagen abluft- und abgasfrei betreiben zu können, zum anderen aber auch die Wirtschaftlichkeit und die mögliche Anwendungsbreite solcher Verfahrenstypin substantiell zu verbessern. Die erfindungsgemäße Lehre geht dabei von der heute im großtechnischen eingesetzten Konzeption aus, das zu trocknende Einsatzgut mit einem Heißgasstrom zu behandeln, der in einem geschlossenen Kreislauf durch die Trocknungsstufe, nachfolgend durch eine Aufbereitungsstufe zur Abtrennung der in der Trocknungsstufe entnommenen Feuchte und dann - üblicherweise nach erneuter Aufheizung - wieder durch die Trocknungsstufe zurückgeführt wird. Die Trocknungsstufe ihrerseits kann dabei einstufig, zum Beispiel als Sprühtrocknung für fließfähige und versprühbare, insbesondere wäßrige Lösungen und/oder Suspensionen, als Wirbelschichttrocknung, als Fließbetttrocknung oder in beliebiger anderer Weise aufgebaut sein, es können aber auch beliebige Kombinationen dieser unterschiedlicher Trocknungstypen in einem Verfahrensschritt integriert oder in anderer Form miteinander verbunden sein. Die Schilderung der erfindungsgemäßen Lehre und des zugehörigen Standes der Technik stützt sich im nachfolgenden weitgehend auf das bekannte Prinzip der Sprühtrockner-Systeme, die Arbeitselemente des erfindungsgemäßen Handelns sind hierauf aber nicht eingeschränkt

### Stand der Technik

Die Mehrzahl der industriellen Sprühtrocknungsanlagen arbeitet mit wasserfeuchten Produkten, die in feinverteilter Form mit einem Heißgasstrom in Kontakt gebracht werden. Als heiße Trocknungsgase werden Luft, heiße Brenngase, in Sonderfällen aber auch Inertgase, insbesondere Stickstoff, eingesetzt. Es wird dabei insbesondere zwischen 3 Systemtypen unterschieden: Die Durchlauftrocknung, die Kreislauftrocknung und die teilgeschlossene Kreislauftrocknung.

Merkmal der Durchlauftrocknung ist, daß das heiße Trocknungsgas, insbesondere Trocknungsluft oder Brenngase, einmal durch das System geleitet werden und die Abluft in die Atmosphäre gelangt. Das Trockenprodukt wird aus der Trocknungszone ausgetragen. Der Abgasstrom wird in der Regel von mitgerissenen Gutanteilen gereinigt. Es ist gleichwohl bekannt, daß diese Technologie zu beträchtlichen Umweltbelastungen durch Austrag unerwünschter Geruchsstoffe, Wirk- und Schadstoffanteile und dergleichen führen kann.

Die in der Praxis eingeführte Alternative zur Bewältigung dieser Problematik ist das System der Kreislauftrocknung. Ein inertes Trocknungsgas, im allgemeinen Stickstoff, wird im geschlossenen Kreislauf so durch das System der Arbeitsstufen geleitet, daß keine Abluft in die Atmosphäre gelangt. Der aus der Trocknungszone abgezogene und mit zu verdampfender Feuchte sowie ausgetragenen Gutanteilen beladende Gasstrom wird von mitgetragenen Feststoffanteilen soweit wie möglich befreit und zur Kondensation des ausgetragenen Wasseranteiles abgekühlt. Dabei wird die Inertgasphase als Ganzes dieser Kondensations- und Waschstufe unterzogen. Die daraus wieder abgetrennte Gasphase wird durch einen Gaserhitzer geführt und in die Trocknungszone zurückgeleitet.

Eine Modifikation mit teilgeschlossener Kreislaufführung sieht zur Erhitzung des im Kreislauf geführten Gasstromes einen sogenannten selbstinertisierenden Lufterhitzer vor, in dem heißes Abgas aus der Verbrennung eines geeigneten Brennstoffes dem Kreislaufgasstrom unter dessen gleichzeitiger Aufheizung zugeführt wird. Ein entsprechender Abgasteilstrom muß der im Kreislauf geführten Gasphase entnommen werden. Durch geeignete Fahrweise kann auch bei direkter Beheizung des Trocknungsgases ein sauerstoffarmes Gemisch gebildet werden, das die Trocknung wasserhaltiger, staubexplosionsfähiger Produkte unter Inertgasbedingungen ermöglicht. Für eine Vielzahl von großtechnischen Trockenprodukten scheidet diese Fahrweise gleichwohl aus. Lediglich beispielhaft seien hier benannt die Arbeitsgebiete der Her-stellung von pulverförmigen, getrockneten Nahrungsmitteln, wie Milchpulver oder die Trocknung von alkalischen Wertstoffgemischen, beispielsweise entsprechenden Wertstoffen auf dem Gebiet der Netz-, Wasch- und/oder Reinigungsmittel.

Die Trocknung wäßriger Zubereitungen von Wertstoffen und Wertstoffgemischen, die als Netz-, Wasch- und/oder Reinigungsmittel geeignet sind, unter Einsatz von überhitztem Wasserdampf als Heißgasstrom ist aus der internationalen Patentanmeldung WO 92/58 49 der Anmelderin bekannt. Die damit verbundenen Vorteile gegenüber der üblichen Sprühtrocknung mit Heißluft als Trockengas liegen zum einen in der Abwesenheit von Sauerstoff, so daß die Probleme bei der Auftrocknung rein oder weitgehend organischer Wertstoffe, beispielsweise entsprechender Tenside auf Naturstoffbasis - insbesondere oxidative Schädigungen oder Brand- beziehungsweise Explosionsgefahren - vermieden werden. Die Trocknung mit überhitztem Wasserdampf zeichnet sich darüber hinaus durch ökonomische und ökologische Vorteile aus. Die Kreislaufführung des Heißdampfes als Trocknungsgas ermöglicht die praktisch abgaslose Fahrweise. Weitere Vorteile, die unter anderem auch durch die grundsätzlichen Unterschiede des Trocknungsgases bedingt sind, finden sich in der angegebenen Veröffentlichung.

Weiterführende Arbeitsanweisungen unter Einsatz der Heißdampftrocknung finden sich in den nachfolgenden, auf die Arbeiten der Anmelderin zurückgehenden Druckschriften, beziehungsweise älteren deutschen Patentanmeldungen: DE-A 40 30 688, DE-A 42 04 035, DE-A 42 04 090, DE-A 42 06 050, DE-A 42 06 521, DE-A 42 06 495, DE-A 42 08 773, DE-A 42 09 432, DE-A 42 34 376 sowie DE-P 42 37 934.2 und DE-P 43 07 115.5. Zum Zwecke der Erfindungsoffenbarung wird hiermit ausdrücklich der Offenbarungsinhalt dieser Druckschriften und älteren Anmeldungen der Anmelderin ebenfalls zum Gegenstand der vorliegenden Erfindungsoffenbarung gemacht, der in Kombination mit den nachfolgend angegebenen weiterführenden Erkenntnissen und Arbeitsregeln zu verstehen ist.

Wenn auch das Arbeiten mit reinem Heißdampf oder wenigstens weitgehend reinem Heißdampf als im geschlossenen Kreislauf geführte Trocknungsgasphase eine Vielzahl von Vorteilen bedingt, so sind naturgemäß damit doch auch einige Einschränkungen verbunden. Die Lehre der Erfindung hat sich die Aufgabe gestellt, solche Einschränkungen weitmöglichst zu beseitigen, ohne die Vorteile einer voll geschlossenen Kreislaufführung der dampfbasierten Heißgasphase aufgeben zu müssen. Zum Verständnis der Erfindung sind im nachfolgenden ohne Anspruch auf Vollständigkeit einige dieser Einschränkungen erläutert, deren Auswirkungen erfindungsgemäß beseitigt oder wenigstens gemildert werden sollen.

Eine Besonderheit der Heißdampftrocknung gemäß der eingangs zitierten WO 92/58 49 liegt im individuellen Temperaturverlauf des jeweils zu trocknenden wäßrigen Guttropfens in der Heißdampfsprühzone. Durch Kondensation des Heißdampfes auf einem kühleren Einsatzgut und Abgabe der Kondensationswärme an das zu trocknende Gut findet eine spontane Aufheizung des wäßrigen Tropfens auf die Siedetemperatur des Wassers unter Arbeitsbedingungen statt, beim Arbeiten unter Normaldruck also auf Temperaturen von etwa 100°C. Diese Siedetemperatur wird als Mindesttemperatur während des gesamten Trocknungszeitraumes im Guttropfen beibehalten. Es ist sofort einleuchtend: Für eine ganze Reihe temperatursensitiver Einsatzmaterialien kann auch der kurze Verweilzeitraum bei 100 bis 110°C negative Auswirkungen haben. Als Beispiele seien benannt: wäßrige Lebensmittel oder Lebensmittelzubereitungen, Peroxid enthaltende Bleichkomponenten aus Waschmittelmischungen, Enzyme, Duftstoffe, gegebenenfalls auch Bleichaktivatoren und andere Komponenten. Eine Teilaufgabe der erfindungsgemäßen Lehre liegt dementsprechend in der Verwirklichung einer Temperaturabsenkung im auftrocknenden Guttropfen in solchem Ausmaße, das Gutschädigungen vermieden werden. Dabei will die erfindungsgemäße Lehre das verfahrenstechnisch besonders einfache und vorteilhafte Arbeiten im Bereich des Normaldrucks beibehalten können.

Eine andere - jetzt verfahrenstechnische - Schwierigkeit liegt in folgendem: Die Kreislaufführung des Trocknungsgases mit dem Ziel einer abgasfreien Verfahrensführung bedingt eine geschlossene Anlage. Ein Zutritt von Falschluft wie bei der üblichen Zerstäubungstrocknung mit Heißluft oder heißen Verbrennungsgasen ist nicht möglich. Die geschlossene Bauweise der mit überhitztem Wasserdampf arbeitenden Trocknungsanlage kann zu einem unterhalb der untersten Heißdampfeinlässe liegenden nahezu strömungsfreien Raum führen, dessen Temperatur etwa der Einlaßtemperatur des Heißdampfes entspricht. Auch die Wände in dem unteren Bereich des Trocknungsbehälters weisen diese Temperatur auf, wenn nicht besondere Vorkehrungen getroffen werden.

Eine Vielzahl von Trocknungsgütern, insbesondere organische Produkte, durchlaufen zumindest während des Trocknungsvorganges eine klebrige oder adhäsive Phase. Die vollständig oder teilweise aufgetrockneten Partikel backen daher in dem relativ strömungsarmen, unterhalb der Heißdampfeinlässe gelegenen Raum leicht aneinander, - aber auch an der Innenwand des Gehäuses - an. Das kann zu einer thermischen Schädigung des Wertstoffgutes führen.

Zur Problematik der Anbackungen thermoplastischer Stoffe und zuckerhaltiger Lebensmittel an den Gehäusewände von Sprühtrocknern wird beispielsweise verwiesen auf K. Kröll, Trocknungstechnik, 2. Band, Trockner und Trocknungsverfahren, 2. Auflage 1978, Springer Verlag, Seite 294. Zur Lösung dieses Problems versieht man nach dem Stand der Technik die Wände der Trockner für solche Güter mit luftdurchströmten Mänteln oder man läßt innen Blasräumer umlaufen, die das Pulver mit Kaltluft abblasen. Es ist auch bekannt, einen kühlen und entfeuchteten Luftstrom so in den Trockner zu führen, daß er als ein abwärts gerichteter Kaltluftschleier innen an den Wänden entlang streicht.

Ein anderes Beispiel für das Einblasen von Kaltluft in den Austragskonus einer Sprühtrocknungsanlage findet sich bei K. Kröll, Trocknungstechnik, 3. Band, Trocknen und Trockner in der Produktion, von W. Kast u.a., Springer Verlag 1989, Seite 188, Bild 3.20. In diesem Sprühturm wird Kaffee-Extrakt getrocknet. Auch hier wird die Kaltluft über einen Ringkanal dem Konus zugegeben. Bei nicht in geschlossenem Gaskreislauf betriebenen Zerstäubungstrocknern arbeitet man üblicherweise mit einem offenen Austragskonus. Wird gleichzeitig noch mit leichtem Unterdruck gearbeitet, um Staubemissionen nach außen zu vermeiden, führt die von unten her einströmende Falschluft zu einer Verwirbelung des Trockengutes, die zu hohe Temperaturen im unteren Bereich des Zerstäubungstrockners nicht entstehen läßt. Der unten offene Austragskonus ermöglicht außerdem das schnelle Ausbringen des getrockneten Produktes, so daß dessen Verweilzeiten im unteren Turmbereich gering sind. Diese Arbeitshilfen scheiden im Fall der Trocknung mit überhitztem Wasserdampf bei geschlossener Kreislaufführung des Dampfes aus.

Die erfindungsgemäße Aufgabe stellt sich bezogen auf diesen Problemkreis wie folgt: Die Gefahren der Überhitzung des Trockengutes, insbesondere im unteren Bereich der Sprühtrocknungsanlage und damit verbundene Störungen der Produktqualität sollen vermieden werden. Gleichzeitig soll aber das Arbeiten mit dem abluft- und abgasfreien voll geschlossenen Kreislauf des Trocknungsgases gewährleistet sein.

### Die erfindungsgemäße Lehre

Die erfindungsgemäße Lehre geht von einem Verfahren zur wenigstens weitgehend abluft- und abgasfreien Trocknung eines wasserhaltigen Gutes durch dessen unmittelbaren Kontakt in einer Trocknungszone mit einem Kreislaufstrom eines Heißgasgemisches aus, das - bezogen auf die Verfahrensbedingungen der Trocknungszone - überhitzten Wasserdampf in Abmischung mit wenigstens einem zweiten Trocknungsgas mit einer Kondensationstemperatur unterhalb der Kondensationstemperatur des Wassers enthält. Das mit dem verdampften Wasser beladene Gasgemisch wird aus der Trocknungszone abgezogen, einer Stufe zur Abtrennung des in der Trocknungszone verdampften Wassers unterworfen, die Gasphase nachfolgend wieder auf Einsatztemperaturen für die Trocknungszone aufgeheizt und dieser aufgeheizte Heißgasstrom in die Trocknungszone zurückgeführt. Der hier beschriebene Kreislauf des Trocknungsgasstromes durch die verschiedenen Arbeits- und Aufbereitungsstufen wird im nachfolgenden auch als "1. Kreislauf" bezeichnet.

Das erfindungsgemäße Verfahren sieht nun vor, daß man aus dem mit verdampftem Wasser beladenen Gasstrom des 1. Kreislaufs nach der Trocknungszone einen Teilstrom abzweigt, diesen Teilstrom unter wenigstens anteiliger Kondensation seines Wassergehaltes kühlt, vom wäßrigen Kondensat abtrennt und den verbleibenden Gasteilstrom dem Kreislauf des Heißgasgemisches wieder zuführt Der Kreislauf des abgetrennten Gasteilstromes wird im nachfolgenden auch als "2. Kreislauf" bezeichnet. Wie im nachfolgenden im einzelnen geschildert, ist es ein wichtiges bevorzugtes Element für die erfindungsgemäße Lehre, den gekühlten Gasteilstrom des 2. Kreislaufs als flexibel im Gesamtverfahren einsetzbare Arbeitshilfe verwerten zu können. Damit wächst diesem Teilstrom im Rahmen des Gesamtverfahrens eine mehr-funktionelle Bedeutung zu: Zunächst einmal wird über diesen Teilstrom verdampftes Wasser im Sinne eines Brüdenteilstromes aus dem Heißgaskreislauf ausgeschleust. Lediglich dieser Teilstrom wird durch hinreichende Kühlung und Kondensation von seiner Feuchte befreit. Durch geeignete Steuerung der Verfahrensparameter, insbesondere Abstimmung des Gehaltes an Wasser im zur Trocknung eingesetzten Heißgasgemisch und Ausmaß der Wasserverdampfung in der Trocknungsstufe, kann damit der im Trocknungsprozeß verdampfte Wasseranteil ausgeschleust werden. Der zwangsläufig mit abgekühlte nicht kondensierte Gasteilstrom wird vor, nach oder bei seiner Wiedervereinigung mit dem Hauptanteil des Kreislaufgases aus dem 1. Kreislauf wieder aufgeheizt. Der gekühlte Gasstrom des 2. Kreislaufs kann aber insbesondere zuvor als gezielte Arbeitshilfe für die verbesserte Bewältigung von Teilaufgaben im Trocknungsprozeß eingesetzt werden.

Die Vorteile des erfindungsgemäßen Verfahrens erschöpfen sich jedoch nicht darin: Durch den gezielten Einsatz von überhitztem Wasserdampf in Abmischung mit wenigstens einem 2. Trocknungsgas gemäß der zuvor gegebenen Definition im 1. Kreislauf wird gerade auch im Bereich des Normaldrucks die Temperaturabsenkung des zu trocknenden Guttropfens in der Heißgasphase unter den Grenzwert von 100°C möglich. Dabei wird durch Auswahl der gemeinsam mit Heißdampf eingesetzten Trokknungsgaskomponente(n) nach Art und Menge die vielgestaltige Steuerung des Trocknungsprozesses möglich. Entsprechend erweitert sich der Bereich für die Anwendbarkeit des abluft- und abgasfreien Trocknungsverfahrens.

Gegenstand der Erfindung sind in weiteren Ausführungsformen sinngemäße Anwendungen dieses Verfahrens zur Trocknung von temperaturempfindlichen Naßprodukten bei Temperaturen unter 100°C im Bereich des Normaldrucks. Betroffen ist damit letztlich der gesamte Bereich heute üblicher großtechnischer Trocknungsverfahren, der die chemische, die pharmazeutische und/oder kosmetische Industrie einerseits ebenso umfaßt wie die Nahrungsmittelindustrie mit ihren vielgestaltigen Verzweigungen.

### Einzelheiten zur Lehre der Erfindung

Zum Verständnis der vollen Anwendungsbreite der erfindungsgemäßen Lehre sei noch einmal klargestellt: Auch wenn im nachfolgenden die Elemente des erfindungsgemäßen Verfahrens im wesentlichen an dem Prinzip beziehungsweise der Technologie der Sprühtrocknung erläutert werden, so ist das erfindungsgemäße verbesserte Trocknungsverfahren hierauf nicht eingeschränkt. Die das erfindungsgemäße Handeln kennzeichnenden Elemente können in gleicher Weise eingesetzt und mitverwendet werden bei allen anderen Technologien der Wertstoffauftrocknung von entsprechenden Naßmaterialien, soweit der Trocknungsprozeß mit dem wenigstens anteiligen Eintrag der Verdampfungsenergie des zu trocknenden Flüssigphasenanteiles über eine Heißgasphase und Austrag des verdampften Flüssigkeitsanteiles aus der Trocknungszone mittels dieses Gasstromes erfolgt. Der Kern des erfindungsgemäßen Handelns liegt immer zum einen in der Verwendung ausgewählter Heißgasmischungen, zum anderen in der Aufteilung des mit verdampfter Flüssigkeit beladenden Gesamtgasstromes in die 2 Teilströme des 1. Kreislaufs und des 2. Kreislaufs. Diesen Teilströmen werden Teilaufgaben zur Regeneration der Gasphase für ihren erneuten Einsatz in der Trocknungsstufe einerseits, vor allem aber auch steuerbare Hilfsfunktionen bei der Bewältigung von Schwierigkeiten im technologischen Ablauf des kontinuierlich durchgeführten Trocknungsverfahrens zugewiesen. Aufgabe des 1. Kreislaufs ist insbesondere der kontinuierliche Energienachschub in die Trocknungszone, das Aufgabenbündel des 2. Kreislaufs ist vielgestaltiger. Als Brüdenteilstrom wird hier der verdampfte Flüssigkeitsanteil ausgetragen. Gezielt verbleibt aber eine gekühlte und in das Verfahren zurückzuführende Gasphase. Dieser 2. Kreislauf wird dabei nicht nur in irgendeiner Weise mit dem 1. Kreislauf wieder vereinigt, je nach den vorliegenden Bedürfnissen kann von diesem gekühlten Gasteilstrom sinnvoller Gebrauch als Arbeitshilfe gemacht werden. Ohne Anspruch auf Vollständigkeit seien die folgenden Arbeitsbereiche für einen solchen weiterführenden Einsatz des 2. Kreislaufs genannt:

Kühlung des getrockneten Gutes innerhalb oder außerhalb der Kühlzone, Kühlung thermisch stark belasteter oder gegebenenfalls ohne Einsatz von kühlenden Hilfsfluiden überlasteter Bereiche der Trocknungszone, Erleichterung und Beschleunigung des Austrages des getrockneten Gutes aus der Trocknungszone, insbesondere unter Verhinderung der Ausbildung von Anbackungen eines unter thermischer Einwirkung zur Klebrigkeit neigenden Trockenproduktes an den Wänden der Trocknungsvorrichtung, insbesondere im Bereich des Konuses einer Sprühtrocknungsanlage und/oder Verhinderung des Verklebens heißer Teilchen miteinander, schließlich aber auch das Ausblasen und damit die rasche Befreiung von Restanteilen der Gasphase des 1. Kreislaufs aus dem zu trocknenden Gut.

Die Erfüllung dieser Teilaufgaben durch den gekühlten Gasstrom des 2. Kreislaufs kann außerhalb oder innerhalb der Trocknungseinrichtung erfolgen, dabei kann diese Verwendung der Gasphase des 2. Kreislaufs im Zusammenhang mit der Vereinigung der Gasphase des 1. Kreislaufs erfolgen, gewünschtenfalls aber auch getrennt vor dieser Vereinigung vorgenommen werden. Entscheidend ist, daß durch diese Aufsplittung der beladenen Trocknungsgasphase in die 2 Teilströme die angestrebte Zielvorstellung der im wesentlichen abluft- und abgasfreien Verfahrensführung mit verbesserten technischen und/oder energetischen Verfahrensergebnissen ermöglicht wird.

Ein weiteres entscheidungserhebliches Bestimmungselement der erfindungsgemäßen Lehre liegt in der Auswahl und Einstellbarkeit der als Trocknungsmittel eingesetzten Heißgasmischung. Ein wesentlicher Bestandteil ist überhitzter Wasserdampf, der jetzt aber in Abmischung mit wenigstens einer weiteren Gaskomponente eingesetzt wird, die auch unter den Bedingungen der Kondensation der verdampften Flüssigphase ihren gasförmigen Zustand beibehält. Wenn auch grundsätzlich - unter Anpassung an die Beschaffenheit des zu trocknenden Gutes - als Mischgaskomponenten alle zur Verfügung stehenden hinreichend permanenten Gase geeignet sind, so wird für den großtechnischen Einsatz hier vor allem Luft und/oder Stickstoff in Betracht kommen. CO₂-enthaltende Brenngase können in einzelnen Fällen mitverwendet werden, für hinreichend diffizile Trockungsaufgaben sind sie jedoch weniger geeignet. Dabei gilt allerdings: Das erfindungsgemäße Verfahren arbeitet mit geschlossenem Gaskreislauf, so daß also nur die unvermeidlichen Gasverluste zu ersetzen sind. Wird beispielsweise zu Beginn eines Verfahrens ein Gemisch aus überhitztem Wasserdampf und einem Brennabgas aus der Selbstinertisierung mittels Luft eingesetzt, dann wird in den Anfangsphasen eines kontinuierlichen Verfahrensabschnittes der vorliegende CO₂-Anteil von einem beispielsweise alkalischen Gut aufgenommen und tritt dann im weiteren Verfahrensverlauf nicht mehr in Erscheinung. Gleichwohl ist es erfindungsgemäß in der Regel bevorzugt, als Mischgaskomponenten Luft und/oder Stickstoff einzusetzen. Hierbei bestimmt die Oxidationsempfindlichkeit des zu trocknenden Wertstoffes beziehungsweise Wertstoffgemisches unter Arbeitsbedingungen, ob die Mitverwendung des Sauerstoffanteiles in der Luft toleriert werden kann oder nicht. Für viele Anwendungszwecke, beispielsweise aus der Nahrungsmittelindustrie oder aus der pharmazeutischen beziehungsweise kosmetischen oder auch aus der allgemeinen chemischen Industrie, wird der Einsatz von im wesentlichen sauerstofffreien Mischungen aus Heißdampf und Stickstoff zweckmäßig sein.

Ein wichtiger Freiheitsgrad, der sich im erfindungsgemäßen Verfahren durch den Einsatz der Gasgemische eröffnet, ist die Steuerbarkeit des Taupunktes für das jeweils konkret gegebene Gasgemisch. Durchweg gilt dabei: Durch die Mitverwendung der gasförmigen Mischungskomponenten wie Luft und/oder Stickstoff in Abmischung mit dem Heißdampf wird der Taupunkt unter Normalbedingungen, insbesondere im Bereich des Normaldrucks, abgesenkt. So ist es möglich, durch zunehmende Anreicherung beispielsweise des Stickstoffs im Heißgasgemisch, den Taupunkt bis auf 50°C oder auch noch niedriger, beispielsweise bis 40°C und auch noch darunter, abzusenken. Vergleichsweise geringere Beimischungen des permanenten Gases führen zu entsprechend schwächerer Absenkung des Taupunktes, etwa auf Temperaturwerte im Bereich von 90 bis 95°C. Konkrete Zahlenwerte für die Einstellung vorbestimmter Taupunkte und die dazu notwendigen Mischungsverhältnisse von Dampf und Zweitgas sind einschlägiges Grundwissen und können der Fachliteratur entnommen werden. So gilt etwa, daß ein Dampf/Luft-Gemisch mit jeweils etwa 50 Vol.-% Dampf und Luft einem Taupunkt von etwa 70°C entspricht. Niedrigere Taupunkte von beispielsweise etwa 60°C, 50°C oder 40°C enthalten zunehmend größere Anteile an Luft und entsprechend verringerte Anteile an Dampf. Wird umgekehrt der Taupunkt nach oben verschoben, so verringert sich der Luftanteil und der Dampfanteil im Gemisch steigt sinngemäß.

Für das erfindungsgemäße Verfahren ist entscheidungserheblich, daß sich hier die Möglichkeit erschließt, im Bereich des Normaldrucks über die Einstellung des Taupunkts des vorgegebenen Heißdampfgemisches derart Einfluß auf die Guttemperaturen im Trocknungsprozeß zu nehmen, daß die Temperaturgrenze von etwa 100°C nicht überschritten, sondern im Gegenteil auch sehr deutlich unterschritten beziehungsweise eingehalten werden kann. Für viele Wertstoffe beziehungsweise Wertstoffgemische der angegebenen Arbeitsbereiche sind kurzfristige Guttemperaturen im Trocknungsprozeß im Bereich von etwa 45 bis 98°C und insbesondere von etwa 55 bis 90 oder 95°C akzeptabel. Dabei kann durch Absenkung des Taupunktes und Einstellung der Verfahrensbedingungen insgesamt darauf Einfluß genommen werden, daß im Trocknungsprozeß beispielsweise Guttemperaturen im Bereich von 55 bis 75 oder 80°C nicht oder höchstens kurzfristig überschritten werden. Eine wesentliche Hilfe im Sinne des erfindungsgemäßen Handelns ist dabei die bereits erwähnte Möglichkeit, den Teilgasstrom des 2. Kreislaufs als Kühlgas so gezielt beizumischen, daß die Guttrocknung im gerade noch akzeptablen Temperaturbereich optimiert, eine Überhitzung des Gutes im Zustande der Auftrocknung aber sicher verhindert werden kann.

Zur Steuerung der Guttemperatur ist es im Sinne des erfindungsgemäßen Handelns in einer Ausführungsform vorteilhaft, im 1. Kreislauf mit Heißdampf enthaltenden Gasgemischen mit Taupunkten im Bereich von etwa 40 bis 95°C oder maximal 98°C zu arbeiten, wobei Gasmischungen mit Taupunkten im Bereich von etwa 55 bis 80°C oder bis 85°C besondere Bedeutung zukommen kann. Für die Zusammensetzung der Gasphase im 1. Kreislauf, bezogen auf Mischungen aus Heißdampf/Stickstoff und/oder Luft folgt daraus, daß mit Wasserdampfgehalten des Einsatzgases im Bereich von etwa 5 bis 95 Gew.-% gearbeitet werden kann. Bevorzugte obere Grenzwerte des Wasserdampfgehaltes im Einsatzgas liegen bei etwa 90 Gew.-% oder auch deutlich darunter zum Beispiel bei 45 bis 50 Gew.-%, 60 Gew.-% oder 80 bis 85 Gew.-%. Bevorzugte untere Grenzwerte des Wasserdampfgehaltes im Einsatzgas liegen im Bereich bis etwa 25 Gew.-%, insbesondere bei Werten bis etwa 20 oder 25 Gew.-%. Wasserdampfgehalten des Einsatzgases im Bereich von etwa 8 bis 70 Gew.-% und insbesondere im Bereich von etwa 10 bis 55 Gew.-% kann besondere Bedeutung zukommen.

Für das Arbeiten im Bereich des Normaldrucks, das leicht abgesenkte oder auch leicht erhöhte Drucke in an sich bekannter Weise einschließt - zahlenmäßige Einzelheiten hierzu werden im nachfolgenden noch gegeben - gelten dann weiterhin die nachfolgenden bevorzugten Verfahrenselemente: Zweckmäßigerweise wird mit Austrittstemperaturen der Heißgasphase des 1. Kreislaufs aus der Trocknungszone gearbeitet, die wenigstens 10°C, vorzugsweise wenigstens 20 bis 30°C über dem Taupunkt dieser Gasphase liegen. Derart stark abgesenkte Austrittstemperaturen der Heißgasphase aus der Trocknungszone werden immer dann zu erwägen sein, wenn vergleichsweise temperatursensitive Wertstoffe beziehungsweise Wertstoffgemische zu trocknen sind. Beim Arbeiten mit vergleichsweise temperaturbeständigen Wertstoffen oder Wertstoffgemischen kann die Austrittstemperatur der Heißgasphase des 1. Kreislaufs aus der Trocknungszone substantiell höher sein und beispielsweise wenigstens 40 bis 50°C oberhalb des Taupunktes der Gasphase liegen, gegebenenfalls aber auch weitaus darüber gewählt werden. Hier wird immer die besondere Beschaffenheit des zu trocknenden Gutes gegenüber dem Einfluß von Temperatur und Feuchtigkeit in den verschiedenen Stadien der Auftrocknung zu berücksichtigen sein. Für eine Vielzahl von Materialien - beispielsweise mineralisches Gut für keramische Werkstoffe - spielen Überlegungen zur Temperatursensitivität des zu trocknenden Gutes überhaupt keine Rolle. Gleichwohl kann auch hier die Auswahl sehr niedriger Taupunkte im Trocknungsgasstrom wesentlich sein. Die optimierte Absenkung des Taupunktes ermöglicht ja doch in der Abkühlung und Trennung des 2. Kreislaufs eine sehr tiefe Absenkung der hier anfallenden gekühlten Gasphase, die als Hilfsmittel in das Gesamtverfahren zurückgeführt wird. Es kann von entscheidender Bedeutung sein, einen hinreichend gekühlten Gasteilstrom in hinreichender Menge zur Verfügung stellen zu können.

Beim Arbeiten mit temperatursensitiven Wertstoffen beziehungsweise Wertstoffgemischen werden im erfindungsgemäßen Sinne bevorzugt Eintrittstemperaturen der Heißgasphase in die Trocknungsstufe im Bereich von etwa 100 bis 300°C und vorzugsweise von etwa 120 bis 280°C gewählt. Besondere Bedeutung kann hier dem Bereich der Eintrittstemperaturen von etwa 150 bis 220°C zukommen. Werden auf der anderen Seite temperaturstabilere oder gar praktisch vollständig temperaturstabile Wertstoffe oder Wertstoffgemische der erfindungsgemäßen Trocknung unterworfen, so kann mit deutlich höheren Eintrittstemperaturen gearbeitet werden. Es ist bekannt, daß für keramische Materialien Eintrittstemperaturen im Bereich bis 700°C geeignet sein können. Bevorzugte Temperaturen liegen im Bereich von etwa 220 bis 450°C und insbesondere bei etwa 280 bis 350°C.

Die Aufheizung der Gasphase des 1. Kreislaufs - gewünschtenfalls aber auch des 2. Kreislaufs oder Anteilen davon - erfolgt zweckmäßigerweise mittels indirektem Wärmeaustausch. Geeignete Vorrichtungen hierfür zählen zum allgemeinen Fachwissen und sind beispielsweise in den eingangs genannten älteren Schutzrechten der Anmelderin im Zusammenhang mit der Durchführung der Heißdampftrocknung beschrieben. Der Begriff des Normaldrucks für den Betrieb des erfindungsgemäßen Trocknungsverfahrens umfaßt im allgemeinen die Bereiche bis etwa 150 mbar Überdruck beziehungsweise Unterdruck, wobei entsprechende Druckabweichungen nach oben oder unten bis etwa 100 mbar und insbesondere bis etwa 50 mbar bevorzugt sein können. In vielen Anwendungszwecken wird mit sehr kleinen Druckabweichungen vom Umgebungsdruck gearbeitet, die dann beispielsweise im Bereich bis etwa 10 oder 15 mbar liegen können.

Die im jeweiligen Anwendungsfall konkrete Ausgestaltung der zusammenwirkenden Gas(teil)ströme des 1. und 2. Kreislaufs läßt - bei Einhaltung der bisher beschriebenen Arbeitsregeln - eine vergleichsweise breite Variation unter Anpassung an die jeweils zu berücksichtigenden Anforderungen und Gegebenenheiten zu. Es lassen sich dabei - bezogen auf die Führung des gekühlten Gasstromes des 2. Kreislaufs - 3 Verfahrensprinzipien unterscheiden:

Der im wesentlichen aus der Permanentgas-Komponente - üblicherweise also Luft und/oder Stickstoff - bestehende (Teil-)Gasstrom (2. Kreislauf) nach dem Durchlaufen der Stufe der Kondensation und Abtrennung des Wassers kann unmittelbar mit dem 1. Kreislaufgas vereinigt und bevorzugt in Abmischung mit ihm erhitzt und in die Trocknungszone zurückgeführt werden. Wie angegeben kann aber in besonders wichtigten Ausführungsformen der gekühlte Gas(teil)strom des 2. Kreislaufs zunächst als Arbeitsmittel, zum Beispiel zur Kühlung, eingesetzt und dann mit dem Gasstrom des 1. Kreislaufs wieder vereinigt werden. Schließlich ist es möglich, beide Prinzipien derart miteinander zu vereinigen, daß ein Anteil des gekühlten Gasstroms (2. Kreislauf) als Arbeitshilfe(n) eingesetzt und zum Rest gewünschtenfalls zusammen mit dem 1. Kreislaufstrom aufgeheizt und wieder in die Trocknungszone zurückgeführt wird. Insbesondere diese zuletzt genannte Variante ermöglicht zusätzliche Freiheitsgrade in der Wahl der sonstigen Verfahrensparameter und damit eine Optimierung des mit dem geschlossenen Gaskreislauf arbeitenden Gesamtverfahrens.

In einer wichtigen Ausführungsform wird im erfindungsgemäßen Verfahren ein fließfähiges und versprühbares Naßgut abluftfrei in einer Sprühtrocknungsanlage getrocknet und dabei bevorzugt zu einem schütt- und rieselfähigen Festgut umgewandelt. Als Naßgut sind hier insbesondere Lösungen und/oder Suspensionen der Wertstoffe und/oder Wertstoffgemische geeignet, es können aber auch einfach feinteilige feste Naßstoffe in die Sprühtrocknungszone eingetragen werden. Grundsätzlich gilt hier, daß der Einsatz von Sprühtürmen bevorzugt sein kann, die entweder im Gleichstrom oder im Gegenstrom oder aber auch in Mischstromtechnik betrieben werden. Auch hier kann auf die einschlägige Fachliteratur verwiesen werden. So ist es bekannt, daß die Anwendung der Gleichstromtechnik besonders bei der Trocknung von wärmeempfindlichem Gut vorteilhaft sein kann.

Die Erfindung sieht dabei in einer wichtigen Ausführungsform insbesondere vor, die Trocknung in einer Mischstromtechnik durchzuführen, die den Sprühturm mit vorgeschalteten und/oder nachgeschalteten weiteren Trocknungsschritten vereinigen. Insbesondere kommt auch der Einsatz einer Trocknungstechnik in Betracht, in der in den Sprühturm integrierte sekundäre Trocknungsschritte vorgesehen sind. Beispiele sind integrierte Fließbetten oder eine integrierte Wirbelschicht.

Gerade beim Arbeiten in Sprühtürmen, die gemäß der erfindungsgemäßen Definition des geschlossenen Kreislaufs unten nicht offen sein können, erschließt sich durch das erfindungsgemäße Handeln mit dem 1. und dem getrennten 2. Kreislauf eine wichtige Verfahrensvariante: Erfindungsgemäß kann es hier zweckmäßig sein, daß die heiße Trocknungszone im Sprühturm mit der gekühlten Gasphase des 2. Kreislaufs unterschichtet wird. Zur Durchführung dieser Variante helfen wiederum weitere Naturgesetzlichkeiten: Die gekühlte Gasphase des 2. Kreislaufs ist in der Regel schwerer - besitzt also eine höhere spezifische Dichte - als die bevorzugt im indirekten Wärmeaustausch aufgeheizte Heißgasphase des 1. Kreislaufs. Die als Kühlphase in den Unterteil des Sprühturms eingetragene 2. Kreislaufgasphase zeigt also eine gewisse Beharrungstendenz in diesem unteren Teil des Sprühturmes, wird aber gleichwohl durch den kontinuierlichen Betrieb des Sprühturmes mit der Heißgasphase im Sprühturm vermischt und geht damit in den Gesamtprozeß wieder ein.

In dieser Ausführungsform des erfindungsgemäßen Verfahrens kann es bevorzugt sein, den gekühlten Gasstrom des 2. Kreislaufs oder einen Anteil hiervon als Hilfsfluid in den unteren Bereich des Sprühturmes einströmen zu lassen, wobei es insbesondere zweckmäßig sein kann, das Hilfsfluid radial und/oder tangential zur Innenwand zu führen. Die Zuführung kann kontinuierlich oder auch pulsierend beziehungsweise intermittierend erfolgen. Es kann dabei zweckmäßig sein, das Hilfsfluid über einen Doppelmantel mit durchlässiger Innenwand einströmen zu lassen. Bevorzugt ist es dabei, die gekühlte Gasphase des 2. Kreislaufs durch eine Vielzahl von Schlitzen diesem unteren Teil des Trocknungsturms zuzuführen, die durch ein schuppenartiges Überlappen von Segmenten der Innenwand gebildet sind. Der durch den Doppelmantel strömende gekühlte Gasanteil des 2. Kreislaufs kühlt zunächst die Innenwand im Austragsbereichs des Trocknungsturms bevor das Kühlfluid in das Innere des Turms einströmt. Die dann erfolgte tangentiale Strömung verhindert Anbackungen eines gegebenenfalls klebrigen Trocknungsgutes oder vermindert diese zumindest. Besonders wichtig kann es jedoch sein, daß das Hilfsfluid intermittierend, also pulsierend zuströmt. Schon vorhandene Anbackungen werden durch die Strahlstoßkraft des insbesondere tangential zur Innenwand strömenden 2. Kreislaufgasstromes frei geblasen. Die mit steigender Strömungsgeschwindigkeit stark anwachsende Strahlstoßkraft des Hilfsfluids ermöglicht es auch fest sitzende Anbackungen abzulösen, die gegebenenfalls ein kontinuierlich strömender Gasteilstrom nicht entfernen kann. Die Strömungsgeschwindigkeit, die maßgeblich die Strahlstoßkraft des Hilfsfluids bestimmt, sowie die Impulsfrequenz kann in Abhängigkeit vom Trocknungsgut und den sonstigen Verfahrensbedingungen eingestellt werden. Das in das untere Austragsende des Trocknungsturms eingeblasene kühle Hilfsfluid führt gleichzeitig zur raschen Absenkung der Produkttemperatur, auch schon vor dessen Austrag. Darüber hinaus nimmt der trockene Gasstrom des 2. Kreislaufs Restanteile des Heißgases aus dem 1. Kreislauf aus ihrer Abmischung mit dem Produkt.

In einer besonderen Ausführungsform kann erfindungsgemäß eine zusätzliche Kühlung des unteren Turmbereichs und/oder des darin befindlichen Trockengutes vorgenommen werden. In dieser Ausführungsform wird feinverteilter Wassernebel oder gekühlter Wasserdampf als Kühl- und Reinigungsmedium für den unteren Bereich des Trocknungsturmes und die Gehäusewände mitverwendet. Die Einführung dieser Hilfsmittel kann beispielsweise über den als Hilfsfluid eingetragenen gekühlten Teilstrom des 2. Kreislaufs aber auch unabhängig hiervon erfolgen. Durch Einsatz dieses zusätzlichen Kühlmittels gelingt die verstärkte und sehr rasche Abkühlung des Gehäuses und/oder des Trockengutes wenigstens in seinen Außenbereichen in sehr kurzer Zeit, ohne daß damit eine nicht in Kauf zu nehmende Erhöhung der Klebrigkeit oder des Wassergehaltes des Trockengutes verbunden sein müßte. Auch die Gesamtbilanz des Trocknungsverfahrens wird durch solche geringen in den geschlossenen Gaskreislauf eingetragenen Wassermengen nicht substantiell gestört. Der eingetragene Wasser- beziehungsweise Kühldampfanteil kann über die Kondensationsstufe des 2. Kreislaufes wieder ausgetragen werden.

Es sei hier noch einmal wiederholt: Wenn die Erfindungsschilderung bisher auch im wesentlichen an der Sprühtrocknung erfolgt ist, so ist die Lehre des erfindungsgemäßen Handelns hierauf nicht eingeschränkt. Andere Trocknungsverfahren, die mit dem Prinzip des strömenden gasförmigen Trocknungsmediums arbeiten, können von der erfindungsgemäßen Lehre ebenfalls mit Vorteil Gebrauch machen. So kann beispielsweise die Trocknung in der Wirbelschicht oder die entsprechende Trocknung an einem ruhenden und/oder bewegten stückigen Naßgut durchgeführt werden, wobei auch hier der gekühlte Gasstrom des 2. Kreislaufs als zusätzliches Arbeitsmittel beziehungsweise zusätzliche Arbeitshilfe - zum Beispiel zur Kühlung des aufgeheizten Trockengutes - eingesetzt werden kann.

Die Erfindung betrifft die Anwendung des erfindungsgemäßen Prinzips zur Trocknung praktisch beliebiger Wertstoffe und/oder Wertstoffgemische. In einer besonders wichtigen Ausführungsform werden temperaturempfindliche Naßprodukte bei Temperaturen unterhalb 100°C im Bereich des Normaldrucks getrocknet. Wichtig ist allgemein die Anwendung des erfindungsgemäßen Verfahrens unter Einsatz eines inerten Heißgasstromes zur abgasfreien beziehungsweise abgaskontrollierten Trocknung von staubexplosionsgefährdeten und/oder toxischen und/oder Lösungsmittelanteile enthaltenden beziehungsweise zum Pluming neigenden Einsatzmaterialien, insbesondere aus dem Bereich der Netz-, Wasch- und Reinigungsmittel beziehungsweise ihrer Inhaltsstoffe, der Fungizide, der Herbizide und Insektizide und/oder pharmazeutischer beziehungsweise kosmetischer Hilfs- und Wertstoffe.

Die besonders eingehend dargestellte Ausbildung in der Form der Sprühtrocknung als alleiniger Trocknungsschritt oder als Arbeitsstufe in mehrstufigen Trocknungsverfahren hat insbesondere Bedeutung bei der Gewinnung von Nahrungsmitteln einschließlich Molkereiprodukten, Kosmetika und Hilfsstoffen für diese Einsatzgebiete.

Als spezielle Beispiele für das Gebiet der Nahrungsmittel- und Molkereiindustrie seien benannt: die Herstellung von getrockneten Materialien in Pulver- oder Agglomeratform aus den Bereichen Milch, Kindernährmittel, Käse/Molkenprodukte, coffee-whiteners, Eier, Tomaten, Gewürze/Kräuterextrakte, Suppenmischungen, Kaffee/KaffeeErsatz, Kokosnußmilch, Aromen, Nahrungsmittel auf Sojabasis.

Als Beispiele für Produkte der pharmazeutischen Industrie seien benannt: Schmerzmittel, Antibiotika, Enzyme, Plasma/Plasmaersatz, Impfstoffe, Vitamine, Hefen. Beispiele für Trockenprodukte der chemischen Industrie aus gängigen Verfahren der hier betroffenen generischen Art sind neben Netz-, Wasch- und Reinigungsmitteln beziehungsweise ihren Inhaltsstoffen beispielsweise Katalysatoren, Farbstoffe/Pigmente, Gerbstoffe, organische und anorganische Feinchemikalien, Fungizide, Herbizide, Insektizide, Düngemittel und dergleichen. Aus dem Bereich der keramischen Industrie seien benannt: Carbide, Ferite, Nitride, Oxide, Silikate, Steatite und Titanate. Auch Polymerchemikalien wie Harnstoff- und Melaminformaldehydharze, PVC, PMMA und dergleichen seien als Beispiele für den Einsatz der erfindungsgemäßen Lehre benannt.

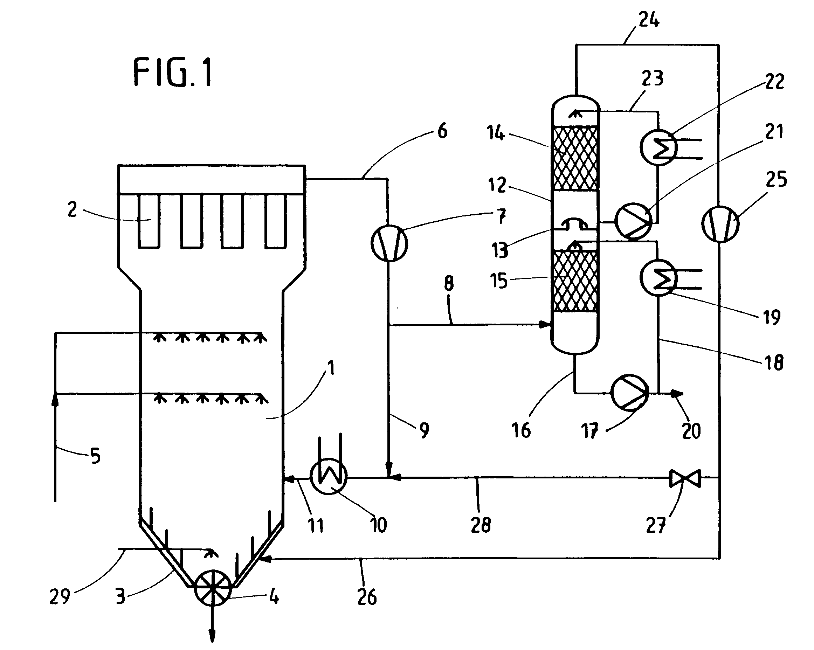

Wesentliche Verfahrensprinzipien zur Durchführung des erfindungsgemäßen Verfahrens werden beispielhaft in den nachfolgend erläuterten Figuren 1 bis 6 dargestellt. Hierzu gilt:
Figur 1 zeigt den zur Durchführung des Trocknungsvorganges eingesetzten Sprühturm 1 mit dem in seinem Kopfteil integrierten Filter 2. Der konusförmige untere Bereich des Sprühturmes 3 ist in Form eines Doppelmantels mit durchlässiger Innenwand ausgebildet, so daß die über Leitung 26 in diesen Bereich eingeführte gekühlte Gasphase des 2. Kreislaufs, beispielsweise durch eine Vielzahl von Schlitzen, diesem unterem Teil des Trocknungsturms zugeführt werden kann. An dessen unteren Ende befindet sich die Austragsvorrichtung 4 für das getrocknete Gut. Das zu trocknende wasserhaltige Gut wird über Leitung 5, beispielsweise in Form einer Lösung, Suspension und/oder Emulsion im oberen Bereich des Trocknungsturmes zugeführt. Die fließfähige Phase des zu trocknenden Gutes kann in einer Mehrzahl von Düsenebenen und/oder über eine Mehrzahl von Düsen zugeführt werden. In an sich bekannter Weise kann auch eine Mehrzahl von zu trocknenden Naßmaterialien in das Innere des Sprühturmes eingeführt werden. Die mit dem verdampften Wasser beladene Heißgasphase wird mittels des Ventilators 7 über Leitung 6 aus dem Kopf des Sprühturmes abgezogen und nachfolgend in zwei Teilströme aufgeteilt. Der eine Teilstrom (1. Kreislauf) wird über Leitung 9 der bevorzugt indirekten Heizvorrichtung 10 zugeführt und über Leitung 11 wieder in den unteren Bereich des Trocknungsturmes 1 gegeben. Der über Leitung 8 abgezogene, mit verdampftem Wasser beladene Teilstrom wird einer Kühl- und Kondensationsstufe 12 zugeführt, die in Figur 1 als zweistufig arbeitende Kolonne dargestellt ist. Die beiden in 12 übereinander angeordneten und durch den Glockenboden 13 von einander getrennten Arbeitsstufen sind mit den Packungen 14 und 15 ausgerüstet. Kondensierte Flüssigphase wird vom Boden der Kolonne 12 über Leitung 16 mittels der Pumpe 17 abgezogen und anteilsweise über Leitung 18 und Kühler 19 im Kreislauf in die Kolonne 12 zurückgeführt und dort unterhalb des Glockenbodens auf die Packung 15 aufgegeben, beispielsweise aufgesprüht. In entsprechender Weise wird mittels der Pumpe 21 in der oberen Stufe der Kondensationskolonne 12 vom Glokkenboden 13 Flüssigphase abgenommen, über den Kühler 22 gekühlt und über 23 auf den Kopf der Packung 14 aufgegeben. Der aus dem Verfahrenskreislauf auszuschleusende Anteil an Flüssigphase wird über Leitung 20 entnommen und kann von hier aus gewünschtenfalls einer weiteren Reinigung und/oder Wiederverwertung zum Beispiel bei der Herstellung weiterer Anteile des über 5 zuzuführenden fließfähigen Einsatzmateriales zugeführt werden. Am Kopf der Kondensationskolonne wird über Leitung 24 mittels des Ventilators 25 der gekühlte Teilgasstrom abgezogen und über Leitung 26 dem Doppelboden 3 zugeführt und gelangt von hier durch die Öffnungen dessen Innenwandung in den unteren Teil des Sprühturmes 1. Durch die Bewegung im Innenraum des Sprühturmes vermischt sich dieser Gasteilsstrom mit dem über 11 zugeführten Heißgas und wird damit wieder Teil des Verfahrenskreislaufs. Zuvor wird er jedoch als Arbeitsmittel im Sinne der erfindungsgemäßen Lehre in dem konusförmigen Unterteil des Sprühturmes wirksam. Gewünschtenfalls kann über das Ventil 27 und die Leitung 28 ein Anteil dieses gekühlten Teilstromes des 2. Kreislaufs mit dem Heißgasstrom des 1. Kreislaufs vereinigt werden, so daß er mit diesem zusammen in 10 erhitzt und über 11 wieder in den Sprühturm eintritt. Die Figur 1 zeigt schließlich die Möglichkeit, im konusförmigen Unterteil über Leitung 29 erforderlichenfalls eine zusätzliche Kühlhilfe, beispielsweise gekühlten Wasserdampf, fein versprühtes Wasser oder Wassernebel, einzuführen.

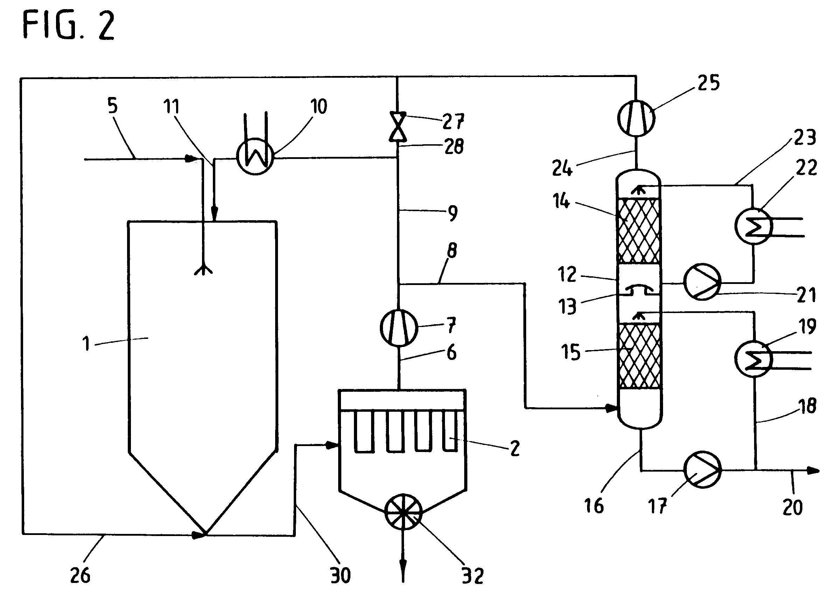

Die Figur 2 zeigt einen im Gleichstrom betriebenen Sprühturm 1 mit der Zuleitung des zu trocknenden wäßrigen Gutes über Leitung 5 und die damit verbundene(n) Düse(n) im Kopf des Turmes 1. Mit Hilfe des über Leitung 26 zugeführten gekühlten Gas(teil)stromes (2. Kreislauf) wird am Fuß der Sprühzone 1 das getrocknete Heißgas/Feststoffgemisch ausgetragen und über Leitung 30 der nicht integrierten Filteranlage 2 zugeführt. An ihrem Fuß befindet sich die Austragsvorrichtung 32 für das Trockengut. Mit dem Ventilator 7 wird über Leitung 6 die mit dem verdampften Wasseranteil beladene Heißgasphase am Kopf des Filters abgezogen. Wie in Figur 1 dargestellt, wird nach Ventilator 7 dieser Gaskreislaufstrom geteilt. Über Leitung 9, Heizvorrichtung 10 und Zuleitung 11 findet die Rückführung des Heißgasstromes (1. Kreislauf) in die Trocknungszone statt. Über 8 wird der mit dem auszuschleusenden verdampften Wasseranteil beladene Teilstrom des 2. Kreislaufs entnommen, der Kondensations- und Trennkolonne 12 zugeführt. Das aus dem Kreislauf zu entfernende Kondensat wird über 20 abgezogen. Die Trennkolonne 12 ist wie in Figur 1 dargestellt mit zwei aufeinanderfolgenden Kühlkreisläufen ausgerüstet. Mittels des Ventilators 25 wird am Kopf dieser Kondensationskolonne über Leitung 24 der gekühlte Gasteilstrom des 2. Kreislaufs abgezogen und über 26 mit der Heißgasphase des 1. Kreislaufs wieder vereinigt. Auch hier kann mittels des Ventils 27 und Leitung 28 ein Anteil des gekühlten Gasstromes (2. Kreislauf) unmittelbar der Heizvorrichtung 10 zugeführt und über Leitung 11 in den Kopf der Sprühzone eingegeben werden.

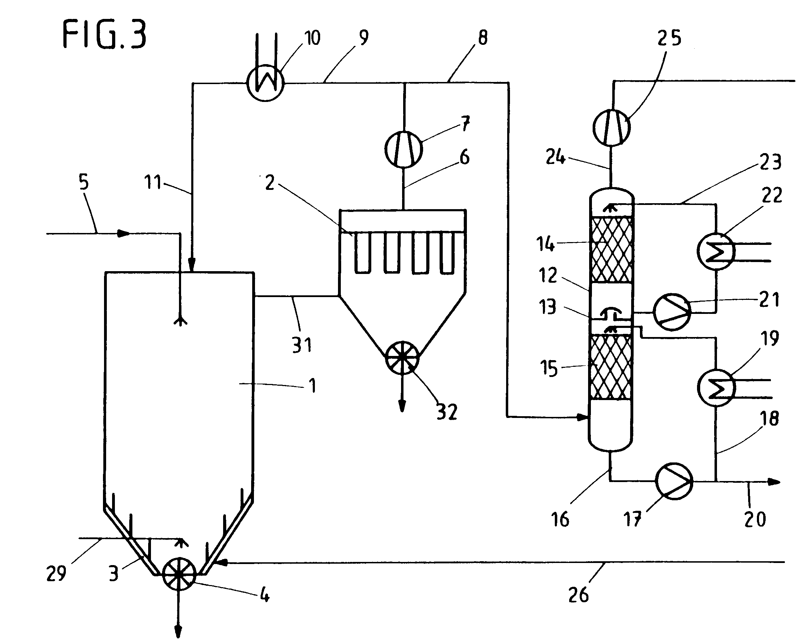

Figur 3 zeigt die Darstellung einer im Gleichstrom mit Umkehr der Gasphase betriebenen Sprühzone 1. Das zu trocknende Gut wird über Leitung 5 im Kopf der Sprühzone 1 eingegeben. Natürlich kann auch hier die Zuführung in mehreren Ebenen und/oder durch eine Mehrzahl von Düsen erfolgen. Der konusförmige Boden der Sprühzone 1 ist wie in Figur 1 mit dem nach innen offenen Doppelmantel 3 und der Austragsvorrichtung 4 für das Trockengut ausgerüstet. Hilfsweise ist hier wieder die mögliche Zufuhr zusätzlicher Kühlmedien wie Wassernebel oder gekühlter Wasserdampf über 29 im unteren Bereich der Sprühzone vorgesehen. Am Kopf der Sprühzone wird über 31 die mit feinteiligem Feststoffgut beladene Gasphase abgezogen und der als Filter dargestellten Trennvorrichtung 2 zugeführt. Am Boden dieser Trennvorrichtung befindet sich die Austragsvorrichtung 32 für das hier abgeschiedene Feststoffgut. Die davon befreite Heißgasphase wird mittels des Ventilators 7 und Leitung 6 vom Kopf der Trennvorrichtung abgezogen, über die Leitungen 9 und 11 und den darin integrierten Erhitzer 10 schließt sich der 1. Kreislauf des Heißgases. Auch hier wird über die Leitung 8 der mit dem auszukreisenden verdampften Wasseranteil beladene Teilstrom abgezweigt, der Trennkolonne 12 zugeführt und hier einer zweistufigen Kühlung und Kondensation unterworfen, wobei hier im einzelnen die entsprechenden Angaben und Bezifferungen aus der Erläuterung der Figur 1 Gültigkeit haben. Der aus dem Verfahrenskreislauf zu entfernende kondensierte Wasseranteil wird auch hier über 20 abgezogen. Der gekühlte und im wesentlichen aus permanentem Gas bestehende Teilstrom (2. Kreislauf) wird mittels des Ventilators 25 über Leitung 24 aus dem Kopf der Trennkolonne 12 entnommen und über 26 dem Doppelboden und damit dem Innenraum der Sprühzone 1 zugeführt.

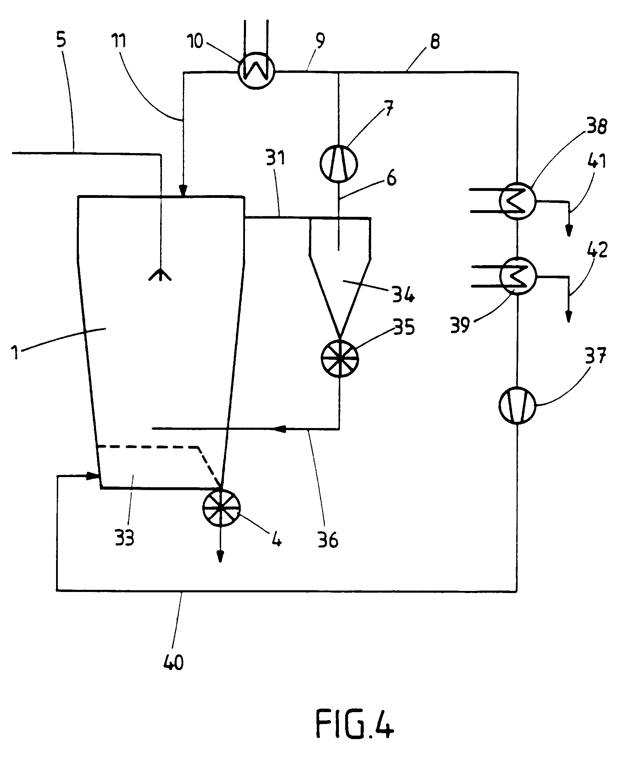

Figur 4 zeigt eine in mehrfacher Weise abgewandelte Ausführungsform für das erfindungsgemäße Handeln. Der Sprühturm 1 ist in seinem Bodenteil mit einem zweiten Trocknungsschritt beispielsweise einer intergrierten Fließbett- oder Wirbelbetttrocknung 33 ausgerüstet. Das in diesem Sinne zweistufig getrocknete Gut wird über die Austragsvorrichtung 4 entnommen. Die Zuführung der zu trocknenden, insbesondere wäßrigen Zubereitungen des Wertstoffes, beziehungsweise des Wertstoffgemisches, erfolgt in der in den vorherigen Zeichnungen dargestellten Weise über Leitung 5 und die damit verbundene(n) Sprühdüse(n) im Kopf des Turmes 1. Am Kopf der Sprühzone 1 wird über Leitung 31 die mit feinteiligem Trockengut beladene Heißgasphase abgezogen und der Trennvorrichtung 34 zugeführt, die hier als Zyklontrennung dargestellt ist. An ihrem Fuße befindet sich die Austragsvorrichtung 35, daß ausgetragene Gut wird über 36 dem Fuß der Sprühzone 1 und damit der dort integrierten zweiten Arbeitsstufe der Wirbelbett- und/oder Fließbetttrocknung zugeführt. Die mit dem verdampften Wasser beladene Heißgasphase wird vom Kopf der Trennvorrichtung 34 mittels des Ventilators 7 über Leitung 6 abgezogen und als 1. Kreislaufstrom über die Leitungen 9 und 11 über die Heizvorrichtung 10 dem Kopf der Sprühzone 1 wieder zugeführt. Über Leitung 8 wird der mit dem auszukreisenden verdampften Wasseranteil beladene Teilstrom des Heißgases abgezogen, durch die einander nachgeschalteten Kühlvorrichtungen 38 und 39 mittels des Ventilators 37 geführt und dann über Leitung 40 an den Fuß der Sprühzone 1, hier insbesondere in die integrierte zweite Trocknungsstufe` zurückgeführt. Der aus dem Gaskreislauf auszuscheidende kondensierte Flüssiganteil wird über die Leitungen 41 und 42 entnommen.

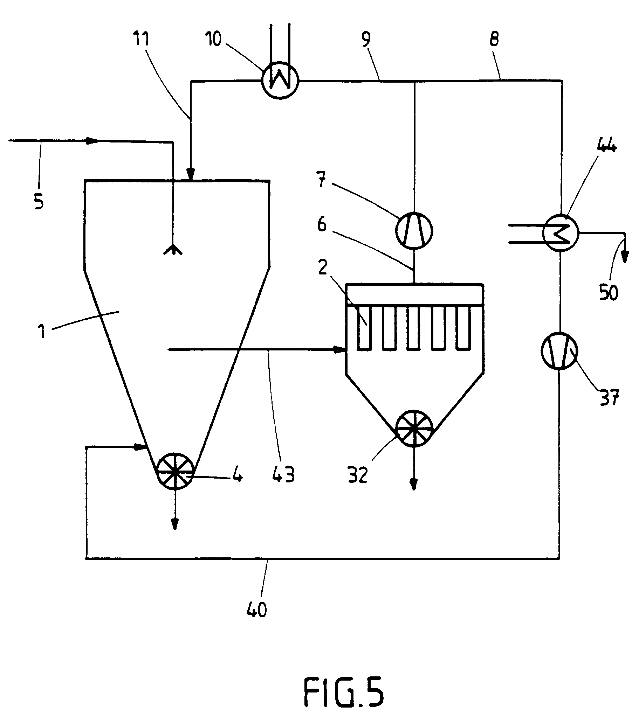

Eine vereinfachte Form der Ausbildung und Verknüpfung der zwei Gaskreisläufe zum 1. und 2. Kreislauf zeigt die Figur 5. Der Sprühzone 1 wird über Leitung 5 das zu trocknende Gut zugeführt. Trockengut wird an ihrem Boden über die Austragsvorrichtung 4 ausgeschleust. Die mit feinteiligen Feststoffanteilen beladene Gasphase wird über 43 der Trennvorrichtung 2 - hier wieder als Filter ausgebildet - zugeführt, darin abgeschiedene Feststoffanteile werden über 32 entnommen. Die mit dem verdampften Wasseranteil beladene Gasphase wird mittels des Ventilators 7 über 6 am Kopf des Filters 2 abgezogen und über die Leitungen 9, Heizvorrichtung 10 und Zuleitung 11 in die Sprühzone 1 zurückgeführt. Der mit dem auszukreisenden verdampften Wasseranteil beladene Teilstrom des 2. Kreislaufs wird mittels des Ventilators 37 über die Kühlzone 44 durch Leitung 8 abgezogen und über Leitung 40 in den unteren Teil der Sprühzone 1 zurückgeführt. Der in 44 kondensierte und auszukreisende Wasseranteil wird über Leitung 50 entnommen.

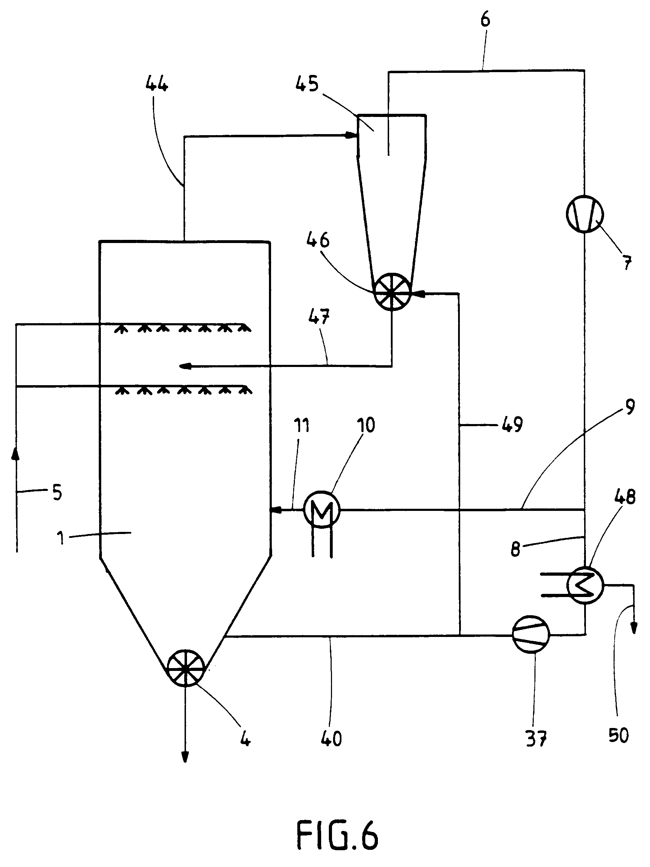

Eine weitere Möglichkeit der Verfahrensgestaltung ist in Figur 6 dargestellt. Der Sprühturm 1 wird über Leitung 5 in seinem oberen Teil mit dem zu trocknenden versprühten Gut beaufschlagt. Getrocknetes Feststoffgut wird am Fuß des Sprühturmes über 4 ausgetragen. Die mit dem verdampften Flüssigkeitsanteil beladene Gasphase wird am Kopf der Sprühzone über Leitung 44 abgezogen und einer Trennvorrichtung 45 - hier wieder als Zyklon dargestellt - zugeführt. Am Boden dieser Trennvorrichtung 45 wird über die Austragsvorrichtung 46 das abgetrennte feinteilige Gut mittels Leitung 47 in den Sprühturm 1 zurückgeführt. Der den verdampften Wasseranteil enthaltende Heißgasstrom wird am Kopf des Zyklon 45 über Leitung 6 mittels des Ventilators 7 abgezogen und dann anteilsweise über Leitung 9, die Heizvorrichtung 10 und die Leitung 11 so in die Sprühzone 1 zurückgeführt, daß darin die Gegenstromfahrweise ausgebildet wird. Der mit dem auszukreisenden Wasseranteil beladene Gasteilstrom (2. Kreislauf) wird über Leitung 8 mittels des Ventilators 37 durch die Kühlvorrichtung 48 geführt. Der gekühlte Gasteilstrom wird einerseits über Leitung 40 in den Fuß der Sprühzone 1 gegeben, zum anderen Teil wird über Leitung 49 ein Anteil dieses gekühlten Gastroms in den Fuß der Trennvorrichtung 45 zum erleichterten Austrag des Gutes mittels 46 und Rückführung über Leitung 47 in den Kopf der Sprühzone 1 gegeben. Das in 48 auskondensierte verflüssigte und aus dem Kreislauf auszukreisende verdampfte Wasser wird über 50 entnommen.

## Patentansprüche

1. Verfahren zur wenigstens weitgehend abluft- und abgasfreien Trocknung eines wasserhaltigen Gutes durch dessen unmittelbaren Kontakt in einer Trocknungszone mit einem Kreislaufstrom eines Heißgasgemisches, das - bezogen auf die Verfahrensbedingungen der Trocknungszone - überhitzten Wasserdampf in Abmischung mit wenigstens einem zweiten Trocknungsgas mit einer Kondensationstemperatur unterhalb der Kondensationstemperatur des Wassers enthält, und Rückführung des wieder aufgeheizten Heißgasstromes in die Trocknungszone (1. Kreislauf), wobei weiterhin aus dem Gasstrom des 1. Kreislaufs nach der Trocknungszone ein Teilstrom abgezweigt und dieser Teilstrom unter Wenigstens anteiliger Kondensation seines Wassergehaltes gekühlt und vom wäßrigen Kondensat abgetrennt wird, woraufhin man den verbleibenden Gasteilstrom dem Kreislauf des Heißgasgemisches wieder zuführt (2. Kreislauf).

2. Verfahren nach Anspruch 1, dadurch gekennzeichnet, daß man den gekühlten Gasstrom des 2. Kreislaufs wieder auf Arbeitstemperatur des Heißgasstromes aufheizt, bevorzugt aber gleichzeitig damit oder zuvor wenigstens einen Anteil dieses gekühlten Gasstromes als zusätzliche Arbeitshilfe im Ablauf des Trocknungsprozesses und dabei vorzugsweise zur Kühlung des getrockneten Gutes, zu dessen Befreiung von Restanteilen der Gasphase des 1. Kreislaufs und/oder zur Erleichterung des Austrages des getrockneten Gutes aus der Trocknungszone einsetzt, wobei es weiterhin bevorzugt sein kann, die gekühlte Gasphase des 2. Kreislaufs wenigstens anteilsweise in der Trocknungszone wieder mit dem 1. Kreislauf zu vereinigen.

3. Verfahren nach Ansprüchen 1 und 2, dadurch gekennzeichnet, daß man als Trocknungsgas zusammen mit dem überhitzten Wasserdampf wenigstens überwiegend Luft und/oder Stickstoff einsetzt.

4. Verfahren nach Ansprüchen 1 bis 3, dadurch gekennzeichnet, daß man das Verfahren zur Trocknung eines temperatursensitiven Gutes einsetzt und dabei Guttemperaturen im Trocknungsprozeß von etwa 100°C nicht über-schreitet, vorzugsweise aber darunter bleibt, wobei bevorzugte Guttemperaturen, die nicht oder höchstens kurzfristig überschritten werden, im Bereich von etwa 55 bis 95°C liegen können.

5. Verfahren nach Ansprüchen 1 bis 4, dadurch gekennzeichnet, daß im 1. Kreislauf mit Heißdampf enthaltenden Gasgemischen mit Taupunkten im Bereich von etwa 40 bis 95°C, insbesondere im Bereich von etwa 55 bis 85°C, gearbeitet wird.

6. Verfahren nach Ansprüchen 1 bis 5, dadurch gekennzeichnet, daß im 1. Kreislauf mit Heißdampf/Stickstoff und/oder Heißdampf/Luft-Gemischen mit Wasserdampfgehalten (Gew.-%) im Einsatzgas im Bereich von etwa 5 bis 90%, vorzugsweise von etwa 8 bis 70%, gearbeitet wird.

7. Verfahren nach Ansprüchen 1 bis 6, dadurch gekennzeichnet, daß im Bereich des Normaldrucks gearbeitet wird.

8. Verfahren nach Ansprüchen 1 bis 7, dadurch gekennzeichnet, daß die Aufheizung der Gasphase(n) des 1. Kreislaufs und gewünschtenfalls des 2. Kreislaufs mittels indirektem Wärmeaustausch erfolgt.

9. Verfahren nach Ansprüchen 1 bis 8, dadurch gekennzeichnet, daß mit Austrittstemperaturen der Heißgasphase des 1. Kreislaufs aus der Trocknungszone gearbeitet wird, die wenigstens 10°C, vorzugsweise wenigstens 20 bis 30°C über dem Taupunkt dieser Gasphase liegen, wobei beim Arbeiten mit vergleichsweise temperaturbeständigen Wertstoffen beziehungsweise Wertstoffgemischen die entsprechende Gasaustrittstemperatur auch wenigstens 40 bis 50°C oberhalb des Taupunkts der Gasphase liegen kann.

10. Verfahren nach Ansprüchen 1 bis 9, dadurch gekennzeichnet, daß beim Arbeiten mit temperatursensitiven Wertstoffen beziehungsweise Wertstoffgemischen mit Eintrittstemperaturen der Heißgasphase in die Trocknungsstufe im Bereich von etwa 100 bis 300°C, vorzugsweise von etwa 120 bis 280°C und insbesondere im Bereich von etwa 150 bis 220°C gearbeitet wird, während beim Einsatz temperaturstabiler Wertstoffe beziehungsweise Wertstoffgemische auch mit deutlich höheren Eintrittstemperaturen gearbeitet werden kann, die zum Beispiel im Bereich bis 700°C, vorzugsweise bei 220 bis 450°C und insbesondere bei etwa 280 bis 350°C liegen.

11. Verfahren nach Ansprüchen 1 bis 10, dadurch gekennzeichnet, daß ein fließfähiges und versprühbares Naßgut abluftfrei in einer Sprühtrocknungsanlage getrocknet und dabei bevorzugt zu einem schütt- und rieselfähigen Festgut umgewandelt wird, wobei der Einsatz von im Gleichstrom, im Gegenstrom oder auch in Mischstrom-Technik betriebenen Sprühtürmen bevorzugt ist, die auch integrierte sekundäre Trocknungsschritte, zum Beispiel ein integriertes Fließbett, aufweisen können.

12. Verfahren nach Ansprüchen 1 bis 11, dadurch gekennzeichnet, daß die heiße Trocknungszone im Sprühturm mit der gekühlten Gasphase des 2. Kreislaufs oder einen Anteil davon unterschichtet wird, dabei aber die Einmischung dieses Anteils des Trocknungsgases in den 1. Kreislauf bevorzugt im Sprühturm erfolgt.

13. Verfahren nach Ansprüchen 1 bis 12, dadurch gekennzeichnet, daß man den gekühlten Gasstrom des 2. Kreislaufs oder einen Anteil davon als Hilfsfluid in den unteren Bereich des Sprühturmes einströmen läßt und dabei bevorzugt das Hilfsfluid radial und/oder tangential zur Innenwand führt, wobei man das Hilfsfluid gewünschtenfalls auch intermittierend zuströmen läßt.

14. Verfahren nach Ansprüchen 1 bis 13, dadurch gekennzeichnet, daß man das Hilfsfluid über einen Doppelmantel mit durchlässiger Innenwand einströmen läßt, wobei bevorzugt ist, diese gekühlte Gasphase durch eine Vielzahl von Schlitzen zuzuführen, die durch ein schuppenartiges Überlappen von Segmenten der Innenwand gebildet sind.

15. Verfahren nach Ansprüchen 1 bis 14, dadurch gekennzeichnet, daß man zur zusätzlichen Kühlung des unteren Turmbereiches und des darin befindlichen Trockengutes Wasser - bevorzugt in feinversprühter und/oder vernebelter Form - und/oder kühlen Dampf in die zu kühlenden Turmzonen einführt.

16. Verfahren nach Ansprüchen 1 bis 10, dadurch gekennzeichnet, daß man die Trocknung in der Wirbelschicht oder an einem ruhenden und/oder bewegten stückigen Naßgut durchführt und auch hier den gekühlten Gasstrom des 2. Kreislaufs oder einen Anteil davon als zusätzliches Arbeitsmittel - zum Beispiel zur Kühlung des aufgeheizten Trockengutes - einsetzt.

17. Verfahren nach Ansprüchen 1 bis 16, dadurch gekennzeichnet, daß wasserhaltige Produkte der chemischen, der kosmetischen und/oder der pharmazeutischen Industrie oder solche der Nahrungsmittel- und Molkereiindustrie getrocknet und dabei insbesondere in Pulver- oder Agglomeratform beziehungsweise in fließfähige Konzentratform überführt werden.

18. Anwendung des Verfahrens nach Ansprüchen 1 bis 17 zur Trocknung von temperaturempfindlichen Naßprodukten bei Temperaturen unter 100°C im Bereich des Normaldrucks.

19. Anwendung des Verfahrens nach Ansprüchen 1 bis 17 unter Einsatz eines inerten Heißgasstromes zur abgasfreien beziehungsweise abgaskontrollierten Trocknung von staubexplosionsgefährdeten und/oder toxischen und/oder Lösungsmittelanteile enthaltenden beziehungsweise zum Pluming neigenden Einsatzmaterialien, insbesondere aus dem Bereich der Netz-, Wasch- und Reinigungsmittel beziehungsweise ihrer Inhaltsstoffe, der Fungizide, Herbizide und Insektizide und/oder kosmetischer oder pharmazeutischer Hilfs- und Wertstoffe.

20. Anwendung des Verfahrens nach Ansprüchen 1 bis 17 insbesondere in der Form der Sprühtrocknung als Arbeitsstufe in mehrstufigen Trocknungsverfahren, insbesondere bei der Gewinnung von Nahrungsmitteln einschließlich Molkereiprodukten, Kosmetika und Hilfsstoffen für diese Einsatzgebiete.

## Claims

1. A process for drying a water-containing material in the at least substantial absence of waste air and waste gases by directly contacting the material in a drying zone with a circulating stream of a hot gas mixture which - based on the process conditions of the drying zone - contains superheated steam in admixture with at least one second drying gas having a condensation temperature below the condensation temperature of water, removing the evaporated water and returning the reheated hot gas stream to the drying zone (1st circuit), characterized in that, after the drying zone, a partial stream is branched off from the gas stream of the 1st circuit, subsequently cooled so that its water content is at least partly condensed and then removed from the water-containing condensate and the remaining partial gas stream is returned to the circuit of the hot gas mixture (2nd circuit).

2. A process as claimed in claim 1, characterized in that the cooled gas stream of the 2nd circuit is reheated to the working temperature of the hot gas stream, although at least part of this cooled gas stream is preferably used either at the same time or beforehand as an additional working aid in the course of the drying process, preferably for cooling the dried material, for freeing the dried material from residues of the gas phase of the 1st circuit and/or for facilitating discharge of the dried material from the drying zone, for which purpose the cooled gas phase of the 2nd circuit is preferably recombined at least partly with the 1st circuit in the drying zone.

3. A process as claimed in claims 1 and 2, characterized in that air and/or nitrogen is/are at least predominantly used together with the superheated steam as the drying gas.

4. A process as claimed in claims 1 to 3, characterized in that the process is used to dry a heat-sensitive material and material temperatures in the drying process of around 100°C are not exceeded, the temperature of the material preferably remaining below that limit, preferred material temperatures which are only briefly exceeded, if at all, being in the range from about 55 to 95°C.

5. A process as claimed in claims 1 to 4, characterized in that gas mixtures containing superheated steam with dew points in the range from about 40 to 95°C and more particularly in the range from about 55 to 85°C are used in the 1st circuit.

6. A process as claimed in claims 1 to 5, characterized in that superheated steam/nitrogen and/or superheated steam/air mixtures with steam contents (% by weight) in the drying gas of from about 5 to 90% and preferably from about 8 to 70% are used in the 1st circuit.

7. A process as claimed in claims 1 to 6, characterized in that it is carried out in the vicinity of normal pressure.

8. A process as claimed in claims 1 to 7, characterized in that the gas phase(s) of the 1st circuit and, if desired, the 2nd circuit are heated by indirect heat exchange.

9. A process as claimed in claims 1 to 8, characterized in that the temperatures with which the hot gas phase of the 1st circuit leaves the drying zone are at least 10°C and preferably at least 20 to 30°C above the dew point of this gas phase, the corresponding gas exit temperature where comparatively heat-resistant useful materials or mixtures thereof are used optionally being at least 40 to 50°C above the dew point of the gas phase.

10. A process as claimed in claims 1 to 9, characterized in that, where heat-sensitive useful materials or mixtures thereof are used, the temperatures with which the hot gas phase enters the drying stage are in the range from about 100 to 300°C, preferably in the range from about 120 to 280°C and more preferably in the range from about 150 to 220°C whereas, where heat-resistant useful materials or mixtures thereof are used, the entry temperatures can be distinctly higher, for example up to 700°C, preferably in the range from 220 to 450°C and more preferably in the range from about 280 to 350°C.

11. A process as claimed in claims 1 to 10, characterized in that a free-flowing and sprayable wet material is dried in a spray drying tower without any waste air and, at the same time, is preferably converted into a pourable and free-flowing solid material, preferably using co-current, countercurrent or even mixed-current spray drying towers which may even comprise integrated secondary drying stages, for example an integrated fluidized bed.

12. A process as claimed in claims 1 to 11, characterized in that a layer of all or part of the cooled gas phase of the 2nd circuit is formed below the hot drying zone in the spray drying tower, although this part of the drying gas is preferably incorporated in the 1st circuit in the spray drying tower.

13. A process as claimed in claims 1 to 12, characterized in that all or part of the cooled gas stream of the 2nd circuit is allowed to flow as an auxiliary fluid into the lower part of the spray drying tower, the auxiliary fluid preferably flowing in radially and/or tangentially to the inner wall and, if desired, even intermittently.

14. A process as claimed in claims 1 to 13, characterized in that the auxiliary fluid is allowed to flow in through a double jacket with a permeable inner wall, the cooled gas phase preferably being delivered through a number of slots formed by a flake-like overlapping of segments of the inner wall.

15. A process as claimed in claims 1 to 14, characterized in that, for additionally cooling the lower part of the spray drying tower and the dry material present therein, water - preferably in finely sprayed and/or mist-like form - and/or cool steam is/are introduced into the zones of the spray drying tower to be cooled.

16. A process as claimed in claims 1 to 10, characterized in that drying is carried out in a fluidized bed or on a fixed and/or moving bed of wet particulate material, all or part of the cooled gas stream of the 2nd circuit again being used as an additional working medium, for example for cooling the heated dry material.

17. A process as claimed in claims 1 to 16, characterized in that water-containing products of the chemical, cosmetics and/or pharmaceutical industry and those of the food and dairy industry are dried and, at the same time, are converted in particular into powder or agglomerate form or into the form of free-flowing concentrates.

18. The use of the process claimed in claims 1 to 17 for drying heat-sensitive wet products at temperatures below 100°C in the vicinity of normal pressure.

19. The use of the process claimed in claims 1 to 17 using a hot inert gas stream for the exhaust-free or exhaust-controlled drying of materials susceptible to dust explosions and/or toxic materials and/or solvent-containing materials or materials with a tendency towards pluming, more particularly from the field of wetting agents, detergents and cleaning products or ingredients thereof, fungicides, herbicides and insecticides and/or pharmaceutical or cosmetic auxiliaries and useful materials.

20. The use of the process claimed in claims 1 to 17, more particularly in the form of spray drying, as one of the stages of multistage drying processes, more particularly in the production of foods, including dairy products, cosmetics and auxiliaries for these fields of application.

## Revendications

1. Procédé de séchage largement sans air d'échappement et sans gaz d'échappement d'un produit contenant de l'eau pour son contact direct dans une zone de séchage avec un courant circulaire d'un mélange de gaz chauds, qui contient par rapport aux conditions du procédé de la zone de séchage, de la vapeur d'eau surchauffée en mélange avec au moins un deuxième gaz de chauffage ayant une température de condensation en dessous de la température de condensation de l'eau et retour du courant de gaz chaud dans la zone de séchage (1^{er} circuit), tandis que du courant gazeux du 1^{er} circuit détache après la zone de séchage un courant partiel et ce courant partiel est refroidi au moins par condensation proportionnelle à sa teneur en eau et est séparé du condensât aqueux, après quoi on ramène le courant partiel de gaz restant au circuit du mélange de gaz chaud (2^{ème} circuit).

2. Procédé selon la revendication 1,
caractérisé en ce qu'
on refroidit le courant gazeux refroidi du 2^{ème} circuit & la température de travail du courant de gaz chaud, de préférence on met en oeuvre en même temps ou auparavant au moins une quote-part de ce courant de gaz refroidi comme auxiliaire de travail additionnel dans le développement du processus de séchage et donc de préférence pour le refroidissement du produit séché, pour sa libération de parties restantes de la phase gazeuse du 1^{er} circuit et/ou pour faciliter l'extraction du produit séché de la zone de séchage, tandis qu'on peut préférer réunir la phase gazeuse refroidie du 2^{ème} circuit au moins proportionnellement dans la zone de séchage avec le 1^{er} circuit.

3. Procédé selon les revendications 1 et 2,
caractérisé en ce qu'
on utilise comme gaz de séchage conjointement à la vapeur d'eau surchauffée au moins principalement de l'air et/ou de l'azote.

4. Procédé selon les revendications 1 à 3,
caractérisé en ce qu'
on met en oeuvre le procédé de séchage d'un produit sensible à la température et qu'on ne dépasse pas des températures du produit dans le processus de séchage d'environ 100°C, mais qu'on reste de préférence en dessous, tandis que des températures de produit préférées, qui ne dépassent pas ou au maximum pour un court délai peuvent être situées dans la zone d'environ 55 à 95°C.

5. Procédé selon les revendications 1 à 4,
caractérisé en ce qu'
on opère au 1^{er} circuit avec des mélanges de gaz contenant de la vapeur d'eau surchauffée ayant des points de rosée dans la zone d'environ 40 à 95°C, en particulier dans la zone d'environ 55 à 85°C.

6. Procédé selon les revendications 1 à 5,
caractérisé en ce qu'
on opère au premier circuit avec vapeur d'eau surchauffée/azote et/ou des mélanges de vapeur d'eau surchauffée/air ayant des teneurs en vapeur d'eau [% en poids] dans le gaz d'utilisation dans la zone d'environ 5 à 90 % de préférence d'environ 8 à 70 %.

7. Procédé selon les revendications 1 à 6,
caractérisé en ce qu'
on opère au niveau de la pression normale.

8. ProCédé selon les revendications 1 à 7,
caractérisé en ce que
le chauffage de ou des phase(s) gazeuse(s) du 1^{er} circuit et si on le désire du second circuit a lieu au moyen d'échange thermique indirect.

9. Procédé selon les revendications 1 à 8,
caractérisé en ce qu'
on opère avec des températures de sortie de la phase gazeuse chaude du 1^{er} circuit provenant de la zone de séchage, qui se situent de préférence 20 à 30°C au-dessus du point de rosée de cette phase gazeuse, tandis que dans le cas du travail avec des matières de valeur ou des mélanges de matières de valeur relativement stables à la température, la température correspondante de sortie du gaz peut se situer au moins 40 à 50°C au-dessus du point de rosée de la phase gazeuse.

10. Procédé selon les revendications 1 à 9,
caractérisé en ce qu'
on opère lors du travail avec des matières ou de mélanges de matières sensibles à la température avec des températures d'entrée de la phase gazeuse chaude dans l'étage de séchage dans la zone d'environ 100 à 300°C, de préférence d'environ 120 à 280°C et en particulier dans la zone d'environ 150 à 220°C, tandis que dans le cas d'utilisation de matières ou de mélanges de matières stables à la température, on peut se situer par exemple avec des températures nettement plus hautes, qui se situent par exemple dans la zone allant jusqu'à 700°C, de préférence de 220 à 450°C et en particulier d'environ 280 à 350°C.

11. Procédé selon les revendications 1 à 10,
caractérisé en ce qu'
un produit humide apte à l'écoulement et pulvérisable est séché dans une installation de séchage par pulvérisation sans air d'échappement et en outre est de préférence transformé en un produit solide en vrac et apte à l'écoulement, tandis qu'on préfère l'utilisation de tours de pulvérisation fonctionnant en courant parallèle en contre-courant ou en technique de courant mixte, qui peuvent comporter aussi des étapes de séchage secondaires intégrées, par exemple un lit fluidisé intégré.

12. Procédé selon les revendications 1 à 11,
caractérisé en ce que
la zone de séchage chaude dans la tour de pulvérisation est alimentée en bas avec la phase gazeuse refroidie du 2^{ème} circuit ou une quote-part de celle-ci, mais en outre a lieu l'émission de cette quote-part du gaz de séchage dans le 1^{er} circuit de préférence dans la tour de pulvérisation.

13. Procédé selon les revendications 1 à 12,
caractérisé en ce qu'
on laisse pénétrer le courant de gaz refroidi du 2^{ème} circuit ou une partie de lui-même code fluide auxiliaire dans la zone inférieure de la tour de pulvérisation et en outre on guide le fluide auxiliaire de préférence radialement et/ou tangentiellement à la paroi intérieure, tandis que si on le désire, an fait affluer le fluide auxiliaire aussi par intermittence.

14. Procédé selon les revendications 1 à 13,
caractérisé en ce qu'
on fait affluer le fluide auxiliaire sur une enveloppe double avec paroi intérieure perméable, tandis qu'on préfère amener cette phase gazeuse refroidie par un grand nombre de fentes qui sont formées par un entrelacement imbriqué de segments de la paroi interne.

15. Procédé selon les revendications 1 à 14,
caractérisé en ce qu'
on introduit dans les zones de la tour à refroidir pour le refroidissement additionnel de la zone inférieure de la tour et du produit sec se trouvant dedans, de l'eau, de préférence sous forme finement pulvérisée et/ou de brouillard, et/ou de vapeur froide.

16. Procédé selon les revendications 1 à 10,
caractérisé en ce qu'
on réalise le séchage dans la couche turbulente ou sur un produit humide en morceaux au repos et/ou en mouvement et on utilise ici aussi le courant gazeux refroidi du 2^{ème} circuit ou une partie de lui-même comme agent de travail supplémentaire, par exemple pour le refroidissement du produit sec chauffé.

17. Procédé selon les revendications 1 à 16,
caractérisé en ce qu'
on sèche des produits contenant de l'eau de l'industrie chimique, des cosmétiques et/ou pharmaceutique ou celle des aliments et de la laiterie et est outre on les transforme en particulier sous forme de poudre ou d'agglomérat ou sous forme de concentrés coulants.

18. Utilisation du procédé selon les revendications 1 à 17 pour le séchage de produits humides sensibles à la température à des températures en dessous de 100°C au niveau de la pression normale.

19. Utilisation du procédé selon les revendications 1 à 17 en utilisant un courant de gaz chaud inerte pour le séchage sans gaz d'échappement ou sans contrôle de gaz d'échappement de matériaux d'utilisation tendant au décollage en danger d'explosion en poussière et/ou toxiques et/ou contenant des parties de solvants, en particulier provenant du domaine des agents mouillants, des agents de lavage et des agents de nettoyage ou de leurs matières contenues, des fongicides, des herbicides et des insecticides et/ou de matières auxiliaires et matières de valeur cosmétiques ou pharmaceutiques.

20. Utilisation du procédé selon les revendications 1 à 17 en particulier sous forme du séchage par pulvérisation comme étape de travail dans un procédé de séchage en plusieurs étapes, an particulier lors de l'obtention d'aliments y compris les produits de laiterie, les cosmétiques et les matières auxiliaires pour ces domaines d'utilisation.
